# EUROPEAN PATENT APPLICATION

(11) **EP 4 793 655 A1**
(43) Date of publication of application: **19.08.2026**
(21) Application number: 25305206.2
(22) Date of filing: 17.02.2025
(51) Int. Cl.: G01S 7/288, G01S 7/292, G01S 7/41, G01S 13/28, G01S 13/36, G01S 13/534, G01S 13/70

(54) **MEASURING CHANGES IN DISTANCE USING RADAR**

(71) Applicant: NXP B.V., 5656 AG Eindhoven (NL)
(72) Inventor: JUNIOR, Fabio Leoli, 31023 Toulouse (FR); MARTINEZ, Vincent Pierre, 31023 Toulouse (FR)
(74) Representative: Schwarzweller, Thomas

(57) **Abstract**

The disclosure relates to measurement of a change in distance over time using radar. Example embodiments include a computer-implemented method of measuring a change in distance over time using FMCW radar signals, the method comprising: transmitting (1701) a series of chirp signals; receiving (1702) a series of reflected chirp signals from a target; and processing (1703, 1704, 1705) the series of reflected chirp signals to determine a change in distance to the target over time from phase differences between the transmitted and received chirp signals, wherein phase differences between successive frames (1301, 1302) derived from the received chirp signals are fitted to a function (1303) to correct for any phase differences greater than 2π between the successive frames (1301, 1302).

## Description

### Field

The disclosure relates to measurement of changes in distance over time using radar.

### Background

Radar systems are used for locating and measuring the distance and relative speed of target objects. In automotive applications, radar systems are used for detecting objects around a vehicle, such as for determining a distance and relative speed of other objects for collision avoidance, speed control and navigation. Radar systems can also be used within a vehicle, sometimes referred to as in-cabin vehicular radar (IVR), to determine the presence and vital signs of a person within the vehicle, which may be the driver or a passenger. Similar radar systems can also be used to determine vital signs in other situations such as in patient care for non-contact detection of heart rate and breathing. Radar systems for such applications may use frequencies within the mm-wave region, i.e. within a range of around 30 to 300 GHz.

### Summary

According to a first aspect there is provided a computer-implemented method of measuring a change in distance over time using FMCW radar signals, the method comprising: transmitting a series of chirp signals; receiving a series of reflected chirp signals from a target; and processing the series of reflected chirp signals to determine a change in distance to the target over time from phase differences between the transmitted and received chirp signals, wherein phase differences between successive frames derived from the received chirp signals are fitted to a function to correct for any phase differences greater than 2π between the successive frames.

The step of processing the series of reflected chirp signals may be performed for one or more range bins of a range response derived from the series of reflected chirp signals.

The function may be fitted to a first series of phase measurements for a first frame. A second series of phase measurements for a second frame may be offset, for example by an integer multiple of 2π, to fit the second series of phase measurements to the function. The offset could in some examples be an arbitrary number, i.e. not necessarily an integer multiple of 2π.

The function may be a polynomial function, a sinusoidal function or a combination of polynomial and sinusoidal functions. The function may for example be a first, second or third order polynomial function.

The method may comprise providing an output signal of displacement to the target over time.

The method may comprise applying a bandpass filter to the output signal and determining a magnitude and frequency of the output signal within a frequency range defined by the bandpass filter.

Each frame may comprise two or more chirps and successive frames may be separated by an inter-frame interval longer than each frame.

According to a second aspect there is provided a method of determining vital signs of a user in a vehicle, the method comprising performing the method according to the first aspect, wherein the target is the user and the output signal is a heart rate and/or breathing rate of the user.

According to a third aspect there is provided an FMCW radar system comprising: a transmitter configured to generate and transmit a series of chirp signals; a receiver configured to receive reflected chirp signals from a target; and a signal processor configured to process the series of reflected chirp signals to determine a change in distance to the target over time from phase differences between the transmitted and received chirp signals, wherein the signal processor is configured to fit phase differences between successive frames containing the received chirp signals to a function to correct for any phase differences greater than 2π between the successive frames.

The signal processor may be configured to fit the function to a first series of phase measurements for a first frame. The signal processor may be configured to offset a second series of phase measurements for a second frame by an integer multiple of 2π to fit the second series of phase measurements to the function.

The function may be a polynomial function, a sinusoidal function or a combination of polynomial and sinusoidal functions. The signal processor may be configured to provide an output signal of displacement to the target over time.

Other features relating to the first aspect may also apply to functions of the signal processor of the third aspect.

According to a fourth aspect there is provided a computer program comprising instructions to cause a signal processor of an FMCW radar system to perform the method according to the first aspect.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

### Brief description of Drawings

Embodiments will be described, by way of example only, with reference to the drawings, in which:
Figure 1 is a schematic diagram of an example frequency modulate continuous wave (FMCW) radar transceiver;
Figure 2 is a simplified block diagram illustrating an example conventional system for monitoring vital signs using radar;
Figure 3 is a simplified block diagram illustrating an example system for monitoring vital signs using radar with phase stitching;
Figure 4a is a schematic representation of a series of radar chirp signals sent as a continuous stream;
Figure 4b is a schematic representation of a series of radar chirps sent as a discontinuous stream;
Figure 5 is a drawing of an example in-vehicle scenario in which a driver is being monitored by a radar system;
Figure 6 is an example plot of displacement over time illustrating chest movements at different sampling instances;
Figure 7 is an example plot of unwrapped phase measurements over time, illustrating a difference between unadjusted and adjusted phase measurements;
Figure 8 is an example plot of distance over time for estimated and actual measurements;
Figure 9 is a plot of signal to noise ratio (SNR) as a function of frequency for an example series of respiration rate measurements;
Figure 10 is a plot of normalized magnitude of an unwrapped phase signal as a function of frequency for an example series of respiration rate measurements with an input noise power of -140 dBm;
Figure 11 is a plot of normalized magnitude of an unwrapped phase signal as a function of frequency for an example series of respiration rate measurements with an input noise power of -125 dBm;
Figure 12 is a plot of average SNR as a function of input noise power;
Figure 13 is a plot of unwrapped phase as a function of time before and after stitching;
Figure 14a is a plot of unwrapped stitched and corrected phase as a function of time with a passband filter applied;
Figure 14b is a plot of unwrapped uncorrected phase as a function of time with a passband filter applied;
Figure 15 is a plot of absolute magnitude as a function of frequency for a series of respiration rate measurements with stitching applied;
Figure 16 is a plot of absolute magnitude as a function of frequency for a series of respiration rate measurements without stitching; and
Figure 17 is a flow diagram illustrating an example method of obtaining displacement measurements from radar signals.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

### Detailed description of embodiments

The present disclosure primarily relates to automotive in-vehicle vital-signs monitoring systems based on FMCW radar associated signal processing. In such systems, the target displacement is that of a surface such as the torso or neck of a vehicle occupant, with movements originating from respiration and heart beats being detected by identification of phase changes of a beat signal derived from a combination of a transmitted and received signal.

In current systems for vital signs detection, which typically operate at 60 GHz, if a phase difference between consecutive chirps exceeds 2π radians (or 360°), a change in range, or displacement, cannot be correctly detected due to the discontinuity being indeterminate. Thus, a pulse repetition interval (PRI) may generally be configured based on a maximum expected displacement, but this leads to many more chirps being transmitted. This consumes greater power and may result in safety limits applied to transmission of radar signals within the vehicle being exceeded.

The method and system disclosed herein overcomes the above problem by estimating a target displacement based on a function, such as a polynomial regression, of the target range information from a group of chirps, using a process that may be referred to as "stitching" because the process in effect stiches together otherwise discontinuous unwrapped output phase (or range) information originating from a distinct group of chirps. A benefit of this approach is that the PRI constraint can be relaxed, thereby allowing a reduction of the number of chirps that need to be transmitted while still obtaining accurate displacement information. Benefits can also be seen in terms of power consumption due to the need for fewer chirps using the same transmit power, or alternatively in terms of performance improvements since the same mean EIRP (effective isotropic radiated power) can be spread over fewer chirps.

A particular application for the method and system disclosed herein is automotive in-cabin FMCW radar systems. Such radar systems are used to detect the presence and vital signs (e.g. respiration & heart rates) of the driver and/or one or more passengers of the vehicle. Multiple radar-based technologies are currently available for in-cabin sensing, including UWB or 60 GHz radar systems. Other systems based on 140 GHz radar currently being developed, which is more sensitive to displacement measurements, may also become available.

A typical respiration rate may be around 12-20 bpm, i.e. 0.2-0.33 Hz, while a typical heartrate may be around 60-120 bpm, i.e. 1-2 Hz. When measuring such low frequency signals and small changes in distance between radar and target, which are of the order of a few mm or less, checking the range from a range/doppler map is usually not accurate enough. Instead, the (unwrapped) phase may instead be used to track movement, and a spectral analysis (e.g., FFT) can then be used to detect the frequency components of the desired signal to isolate a desired displacement signal indicating a vital sign. The unwrapped phase is subsequently converted to a range.

Current regulations (e.g. for 60 GHz & 140 GHz radar systems) mandate a low maximum mean EIRP for in-vehicle applications. A problem is that the signal to noise ratio (SNR) can be insufficient to achieve a required performance in certain specific scenarios. Heartbeat monitoring in particular requires a high SNR due to the small movements being detected, the low received signal and propagation losses, which are higher at 140 GHz. Energy consumption may also be a concern, in particular for electric vehicles, since these sensing devices may be required to operate for long periods of activity and not only when the vehicle is being driven.

A particular feature of the method disclosed herein is a technique that connects the output data from processing multiple groups of chirps in a phase-coherent way even if the phase rotation between chirps, or between groups of chirps, is larger than 2π. This adds one degree of freedom to the system by relaxing the PRI constraint, thereby enabling different chirps and frame scheduling strategies. New scheduling strategies may for example be used to concentrate energy into fewer chirps by reducing the duty cycle, to optimize energy consumption by reducing the number of chirps, or a tradeoff between these two. The method may be used for in-cabin vehicle FMCW radar systems within the mm-wave frequency range, and in particular at specific frequencies such as 140 GHz, 60 GHz and 77 GHz.

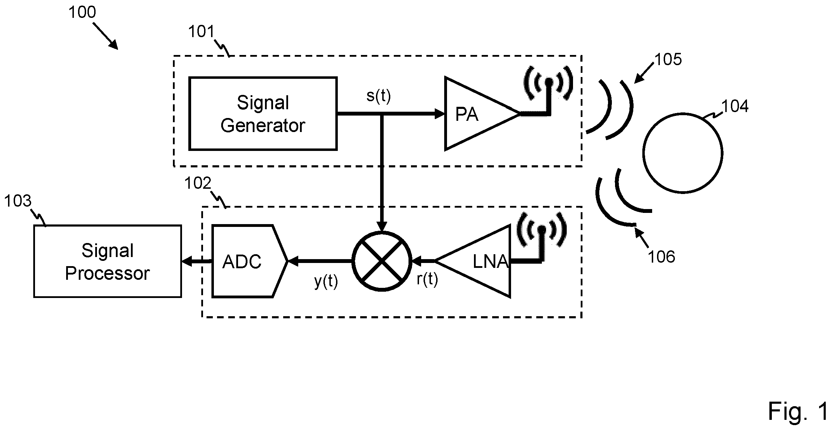

Figure 1 is a schematic diagram of an example FMCW radar transceiver 100 for detecting a distance to a target 104. The transceiver 100 comprises a transmitter 101 and a receiver 102. The transmitter 101 generates and transmits radar signals 105, typically in the form of a series of chirps, and the receiver 102 receives signals 106 reflected off one or more targets 104. The received time series signals r(t) are combined with the signals s(t) generated by the transmitter 101 and a resulting signal y(t) is converted into a digital signal by an ADC before being processed by a signal processor 103.

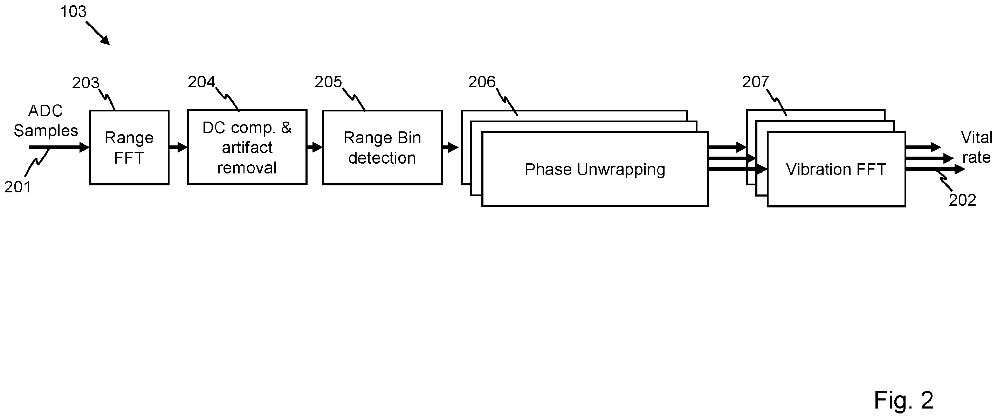

Figure 2 illustrates an example series of modules that may make up a signal processor 103, which is arranged to take ADC output (or IQ) samples 201 from the ADC of the receiver 102 and process the samples to provide one or more vital signs signals 202 such as breathing and heart rate signals. The signal processor 103 is a simplified version of an implementation of a mm-wave sensor processor that is configured to measure chest displacements due to breathing and heartbeat based on FMCW radar signals. The ADC output samples 201 are first converted to provide a range response using a range FFT module 203, following which DC compensation and artifact removal is carried out by a compensation module 204. A range bin detection module 205 localizes selected range bins from the range response and extracts phase from the selected range bins. Phase unwrapping modules 206 then unwrap the phase from one or more bins corresponding to selected target measurements. The unwrapped phase measurements are then analysed using corresponding vibration FFT modules 207, which apply selected bandpass filters and output the vital signs signals 202 corresponding to the required measurements such as heart rate and breathing rate.

When measuring low frequency signals (e.g. vital signs having frequencies of around 0.1 - 2 Hz) and/or small range changes between a radar and a target (e.g. respiration, involving a change of only few cm), it is not possible to use the range information from a range/doppler map. Instead, the unwrapped phase is used to track the movement, and then FFT, or spectral analysis, is used to detect the frequency components of the signal. A change in phase Δ*ϕ_{b}* may be expressed as: $Δ {ϕ}_{b} = \frac{4 π}{λ} Δ R$ where *λ* is the wavelength of the signal and Δ*R* is the change in distance to the target. A smaller wavelength, i.e. a higher frequency signal, will therefore provide a better displacement sensitivity.

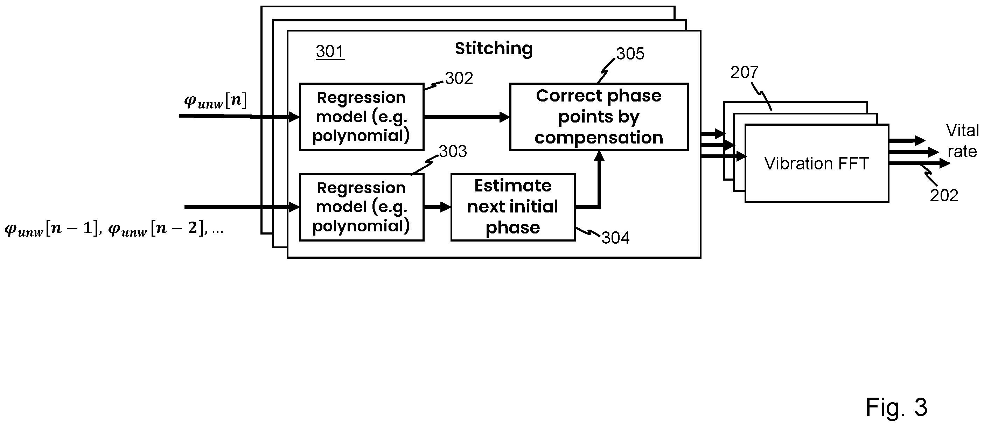

Figure 3 illustrates a stitching module 301 that can be positioned between the phase unwrapping module 206 and vibration FFT module 207 of the signal processor 103 illustrated in Figure 2. The stitching module 301 enables groups of discontinuous chirps to be linked together that would otherwise be too far apart to be linked using conventional techniques due to a longer dwell time between chirps. A first regression model 302 receives an unwrapped phase *φ_{unw}*[*n*] of a current frame *n* and a second regression model 303 receives unwrapped phases *φ_{unw}*[*n* - 1], *φ_{unw}*[*n* - 2] etc. from previous frames. An estimation module 304 estimates a next initial phase based on the second regression model 303. Outputs from the estimation module 304 and first regression model 302 are provided to a correction module 305 that corrects the phase points by compensation, applying an offset to the unwrapped phase as a multiple of 2*π* according to the estimate of the next phase from the estimation module 304. An output is then provided by the stitching module 301 to a vibration FFT module 207 and a vital rate output 202 provided as in the conventional signal processor 103. The stitching module 301 may comprise multiple modules operating in parallel on signals received from multiple targets, each individual module operating in the same way and each providing an output signal to a corresponding vibration FFT module 207.

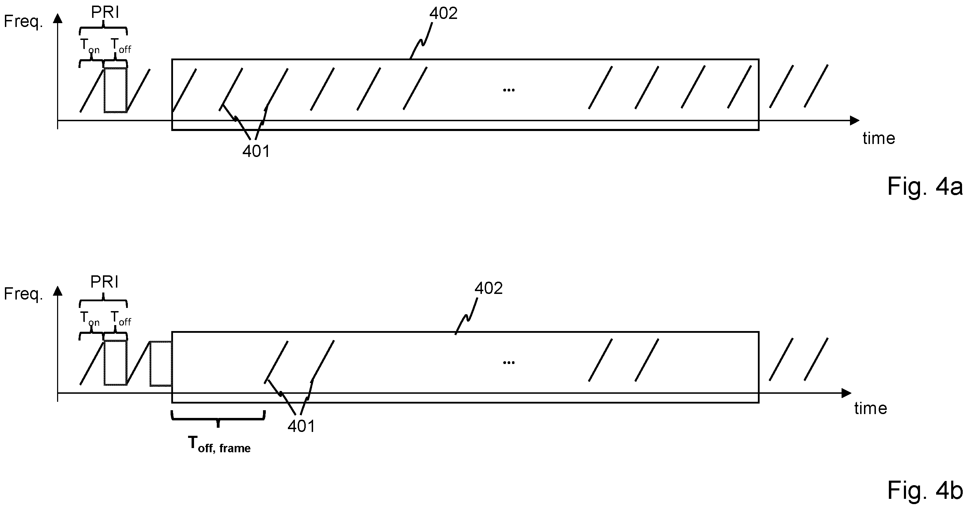

Figures 4a and 4b illustrate the difference between a conventional continuous sequence of chirp signals and an example discontinuous series of chirps or group of chirps according to the present disclosure. In Figure 4a, the chirp signals 401 have a pulse repetition interval (PRI) defined by an on-time Tₒₙ for each chirp signal 401 and an off-time T_{off} between successive chirp signals. The PRI may therefore be defined as a time between the start of successive chirps in a frame. Signal processing of these chirp signals 401 requires a moving window 402 over which coherent integration of chirps is carried out. The moving window 402 may for example be around 20 seconds for a typical in-vehicle vital signs monitoring application. A minimum slow time sampling frequency, which is the inverse of the maximum PRI, may be derived from the maximum range displacement between chirps, otherwise the signal processing may not be able to distinguish which modulo 2π a phase rotation corresponds to.

Figure 4b illustrates an example series of chirps according to the present disclosure, in which the chirp signals 401 are provided as a discontinuous series. In this example, the PRI is the same as in Figure 4a, i.e. the off and on times are the same. A difference is that an interval T_{off,frame} is provided between successive groups of chirps. Each group of chirps may be termed a frame. In this case, groups of two chirps are provided with an interval between each group. In a general aspect the series of chirp signals comprises groups of two or more chirps separated by intervals, where each interval is longer than a pulse repetition interval in the groups of two or more chirps. A stitching process after a phase unwrapping operation, as described above, is applied to the chirps over the moving window 402. between frames. Using stitching allows for a different chirp scheduling strategy, in that it becomes possible to not transmit some of the chirps (e.g. 50%) while still being able to distinguish the target signal phase rotation. A benefit of this is the ability to remove or relax the maximum PRI constraint between some of the chirps, allowing a trade-off between power consumption and SNR. For example, around half of the chirps used in a conventional arrangement may be transmitted for approximately half of the power consumption. Alternatively, individual chirps may be transmitted with a higher instantaneous power while retaining a similar or reduced overall power consumption.

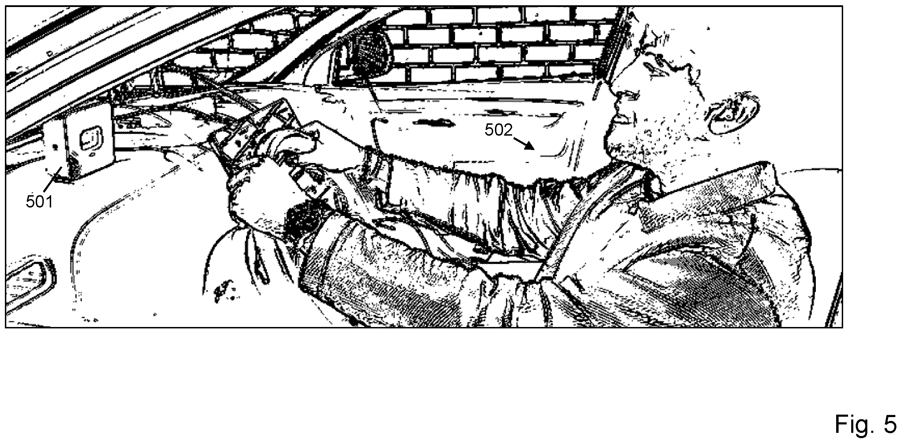

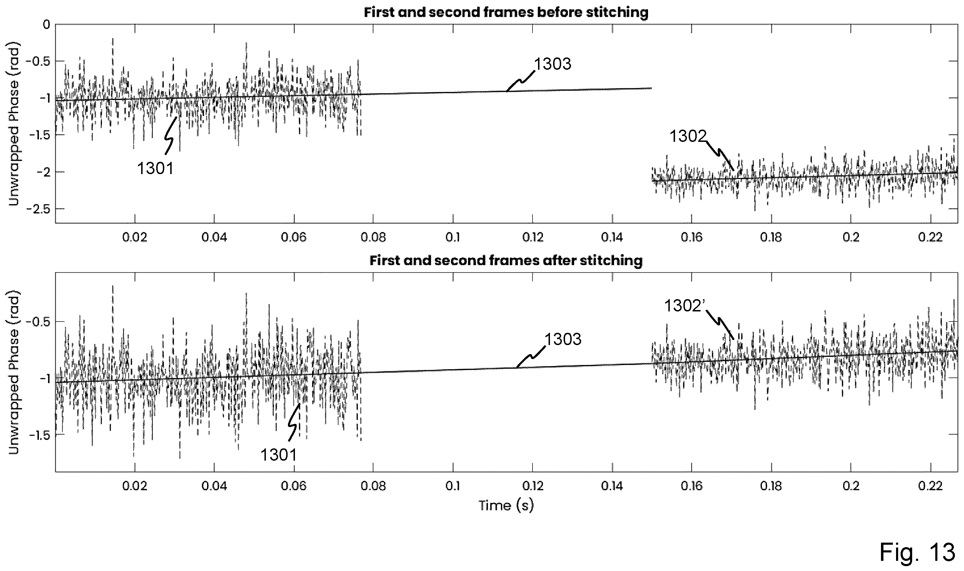

Figure 5 is a drawing of an example in-vehicle experimental arrangement in which an FMCW radar 501 is positioned within a vehicle to monitor vital signs of a driver 502. Measurements illustrated in Figures 13-17 described below are derived from this arrangement. The radar 501 is positioned in front of the driver 502 so that reflected signals from the driver 502 can be processed to obtain vital signs measurements such as breathing and heart rate.

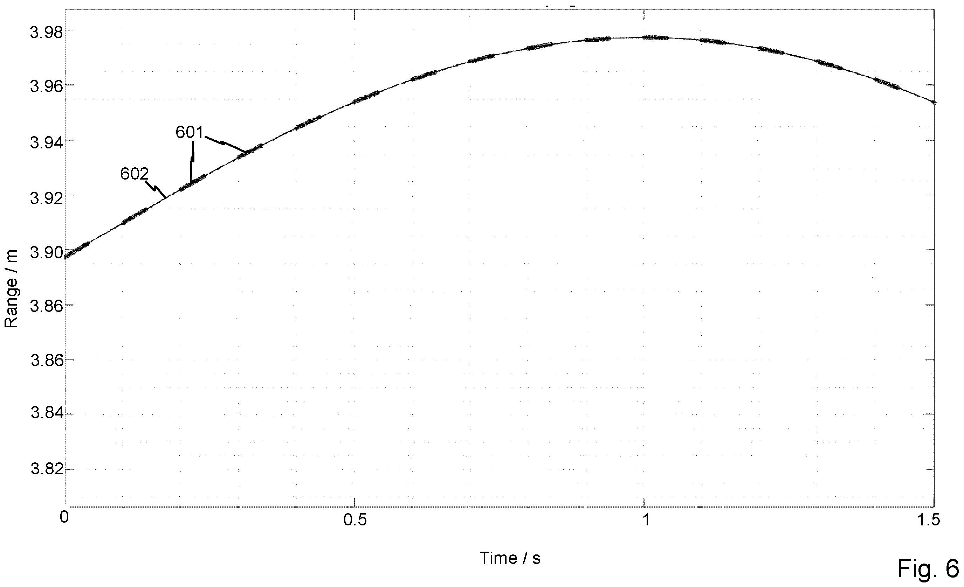

Figure 6 illustrates a series of measurements of chest movement in a simulated static breathing scenario, in which a range between a user's chest and the radar is plotted over time. In this example, each frame 601 comprises 375 chirps with a 50% duty cycle, i.e. an inter-frame gap of the same duration as each frame of chirps. A continuous function 602 is also plotted in Figure 6, which represents a function to which the discontinuous series of frames 601 are fitted. The range results in Figure 6 are derived from phase unwrapping of signals within a bin having the highest power.

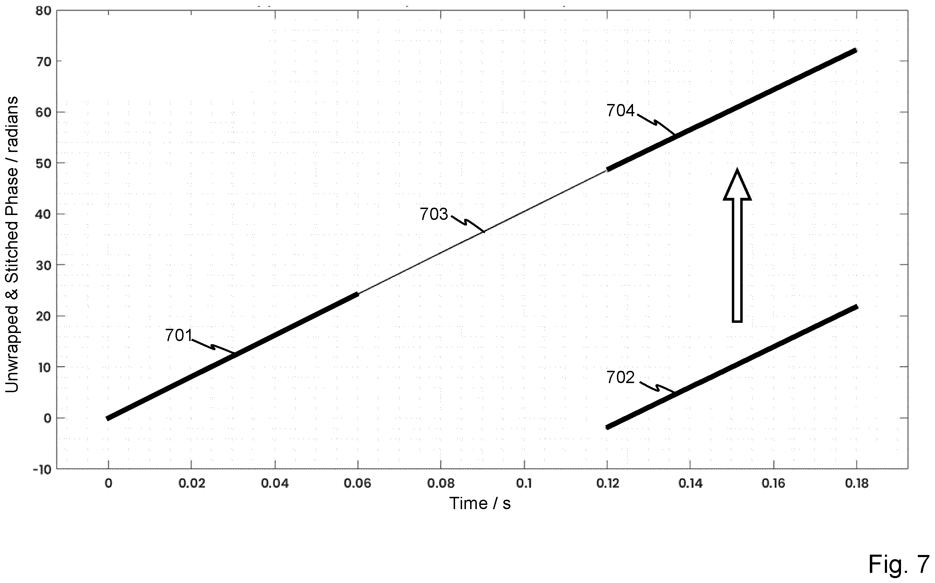

Figure 7 illustrates a more detailed representation of the first two frames from the plot in Figure 6, in which a first frame 701 and a second frame 702 are shown prior to the stitching process. Because, as described above, it is only possible to determine absolute phase within a 2π range, the unwrapped phase of the second frame 702 is discontinuous with that of the first frame 701. By fitting the first frame 701 to a predefined function, in this case a polynomial function 703, the phase of the second frame 702 can be adjusted by a multiple of 2π to obtain an adjusted second frame 704 so that the first frame 701 and the adjusted second frame 704 both fit the function 703. This process may be carried out continuously using a moving window, in which the function is applied over the whole window based on a preceding number of frames fitted to the function and each subsequent frame adjusted to fit the function. This process results in each subsequent frame being effectively 'stitched' to the previous frames, providing a continuous series of unwrapped phase measurements. There is consequently no requirement for having frames being separated by less than ±*π*. The polynomial regression performed on a previous frame is used to estimate the initial phase of the next frame, even if the phase discontinuity between frames is larger than ±*π*. Thus, the technique ensures continuity of the signal in an unambiguous way by evaluating the polynomial on the time stamp of the beginning of the current frame.

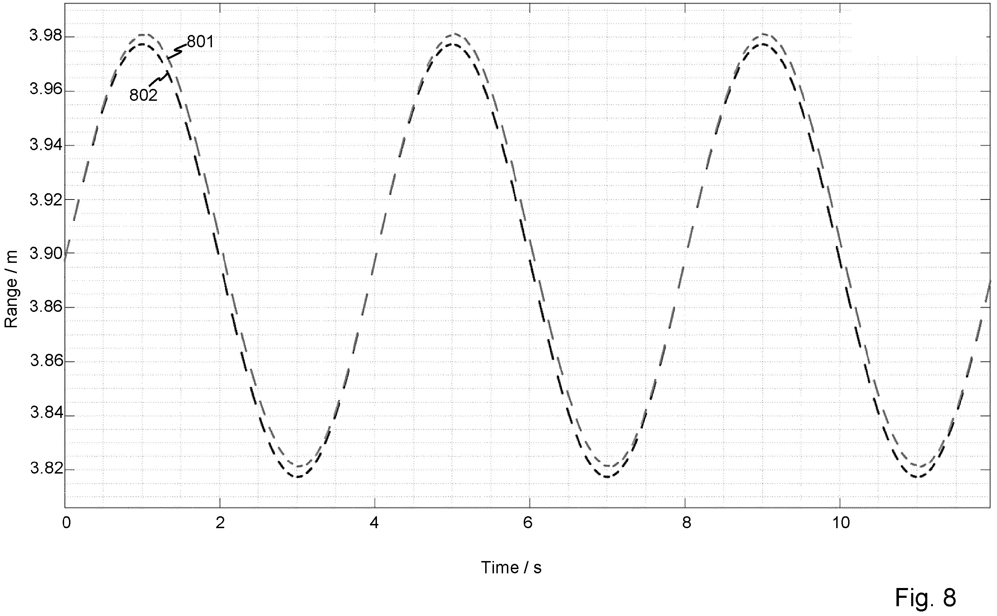

Repeating the above process for a large number of frames and converting the phase information into displacement (according to equation 1 above) results in a measure of chest displacement showing a characteristic frequency and displacement variation. This is illustrated in Figure 8, in which an estimated displacement 801 based on stitched frames fitted to a polynomial function is shown alongside the actual displacement 802, demonstrating a close match.

The function used to fit the phase measurements for multiple frames may for example be a polynomial function of first, second, third or higher order. Other functions such as a sinusoidal function may also be used, which may be particularly applicable for signals having a periodic variation. The function may be fitted to each frame as a whole or may be fitted to only a portion of each frame to save on memory requirements.

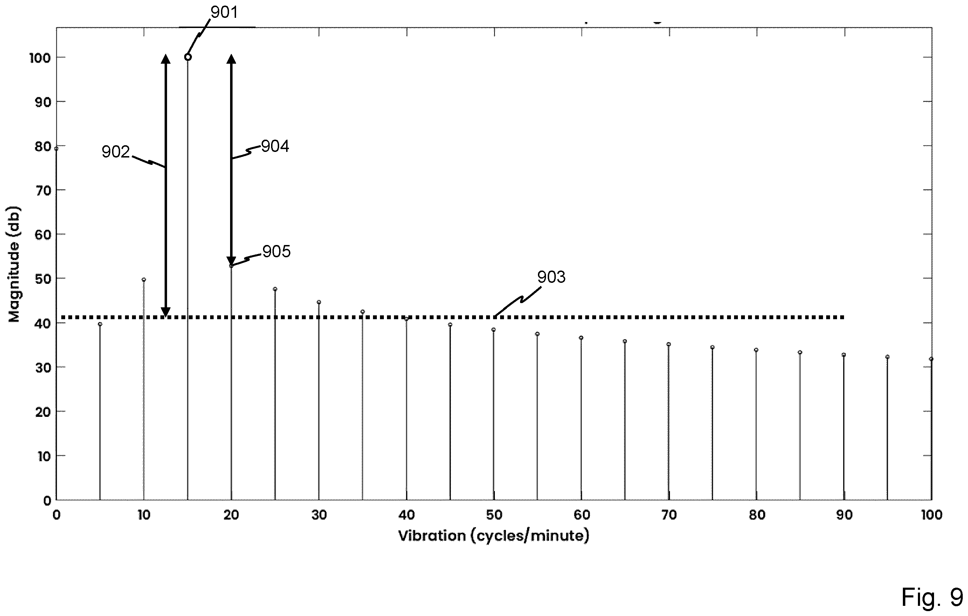

An FFT is used for detection of a frequency of the displacement measurement. Figure 9 illustrates an example FFT output, in which magnitude is plotted as a function of vibration frequency in cycles per minute (60 cycles per minute corresponding to a frequency of 1 Hz). In this example, a respiration rate is detected by a peak measurement 901 at around 15 bpm. An SNR 902 of the vibration spectrum is given by a difference between the magnitude of the peak measurement 901 and a mean background magnitude 903. The SNR may be used as a metric to compare different configurations or algorithms. The higher the SNR, the easier it is for the vital signal frequency to be detected. A peak to sidelobe ratio (PSR) 904 is given by a difference between the magnitude of the peak measurement 901 and a magnitude of a sidelobe 905.

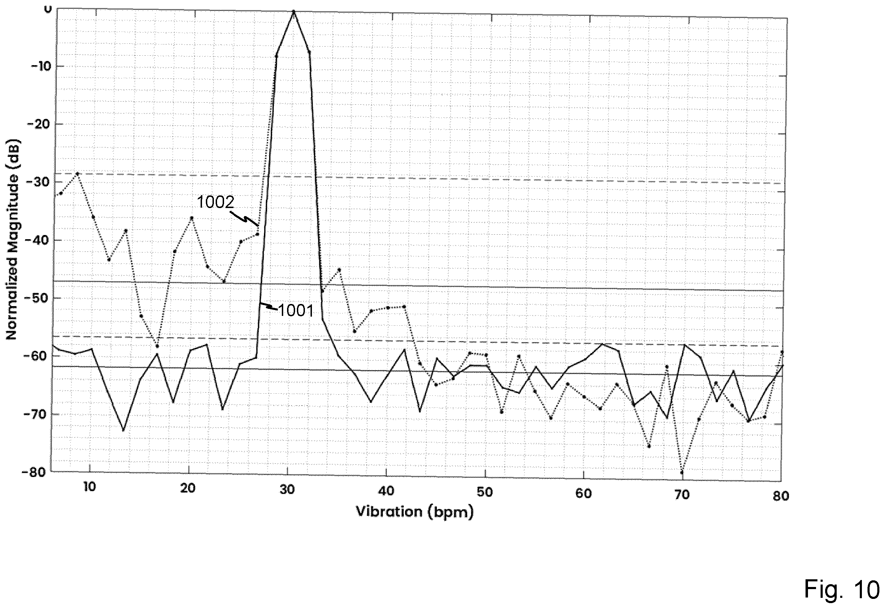

Figure 10 illustrates simulated results showing a frequency spectrum of magnitudes of unwrapped phase signals from first and second sets of simulated measurements 1001, 1002. The first measurements 1001 are obtained according to a baseline using a conventional series of chirps with a mean EIRP of around 3 dBm. The second measurements are obtained according to a series of measurements taken using phase stitching as described above, with a transmitted power adapted to maintain a similar EIRP by having a higher transmitted power each frame and a duty cycle in this case of around 30%. In both cases, a target signal of around 30 bpm (0.5 Hz) is representative of respiration. A metric for the SNR of the target signal is that SNR values should be above around 10 dB to enable detection of a signal, which is achieved in both cases. In this example the noise power is relatively low at -140 dBm. In this low noise configuration, both techniques provide adequate SNR, significantly over 10 dB, enabling the target vibration signal to be readily detected. It should be understood that the SNR values provided in these results are illustrative only and not to be interpreted as limiting.

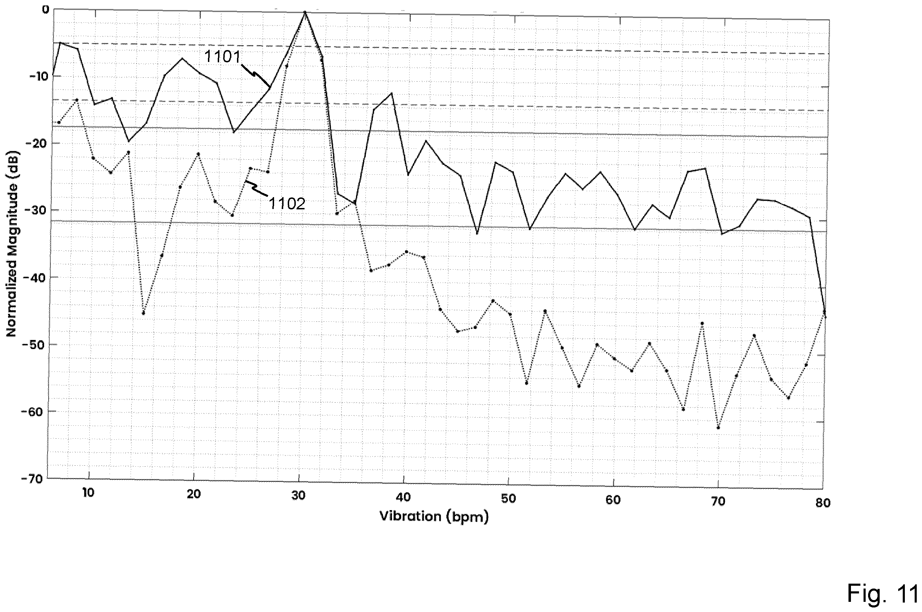

Figure 11 illustrates further results in which the noise power is raised to around -120 dBm, resulting in a lower SNR metric for both the first and second measurements 1101, 1102, which are obtained similarly to the first and second measurements 1001, 1002 of Figure 10. In this example, the second measurements 1102 significantly outperform the first measurements taken according to the conventional method by around 17 dB.

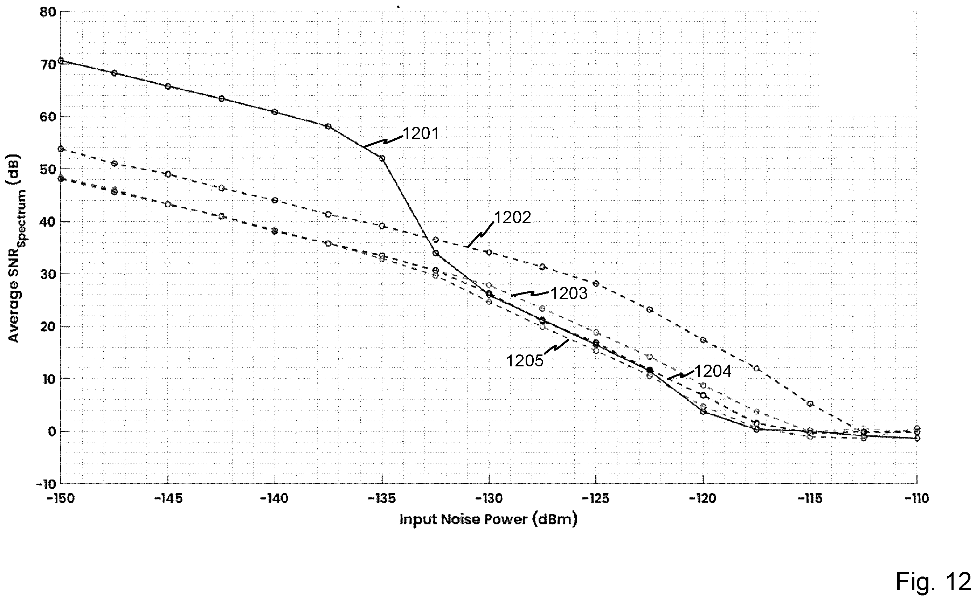

Figure 12 further illustrates the difference between conventional measurements and those taken using the stitching method described herein, plotting an average SNR as a function of input noise power. A first set of baseline measurements 1201 are obtained from a conventional radar system. Second, third, fourth and fifth measurements 1202, 1203, 1204, 1205 are obtained from phase stitching using different duty cycles of 0.1, 0.3, 0.5 and 0.7 respectively. The parameters in each case are as described above in relation to Figures 10 and 11. For a lower input noise power, below around -133 dBm, the conventional measurements 1201 show a higher SNR than all those obtained using the stitching method. For higher input noise powers, the stitching method, particularly at lower duty cycles, show an improved SNR over the baseline measurements. In summary, the new phase stitching technique performs better than the conventional method particularly in scenarios with higher input noise power and particularly with low duty cycle configurations. Similar results were obtained from measuring the PSR metric as a function of input noise power.

The results illustrated in Figure 13 were obtained based on measurements taken using a 140 GHz FMCW radar configured to emit chirps with a sweep time of 25.6 microseconds, a PRI of 150.4 microseconds, an off time of 73 ms and a bandwidth of 10 GHz. The unwrapped phase results before stitching, illustrated in the upper plot of Figure 13, show a discontinuity between first and second frames 1301, 1302. The first frame 1301 is fitted to a polynomial function 1303 and, after stitching, the unwrapped phase of the adjusted second frame 1302' fits the polynomial function 1303, as shown in the lower plot of Figure 13.

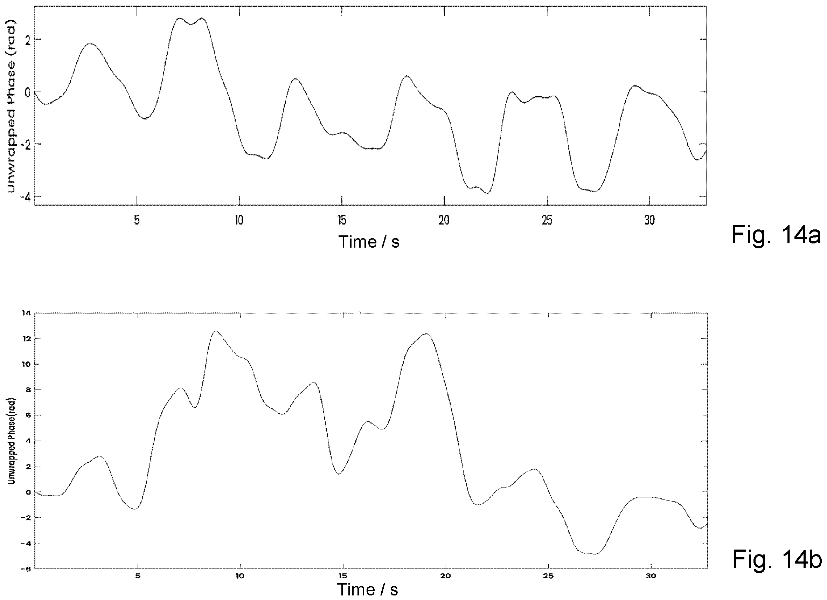

Figure 14a is a plot of unwrapped phase after stitching and after a passband filter is applied to isolate a respiration signal, which can clearly be seen in the plot of phase over time. Figure 14b shows the results without stitching, in which no clear signal can be seen. This is further illustrated in the FFT spectrum in

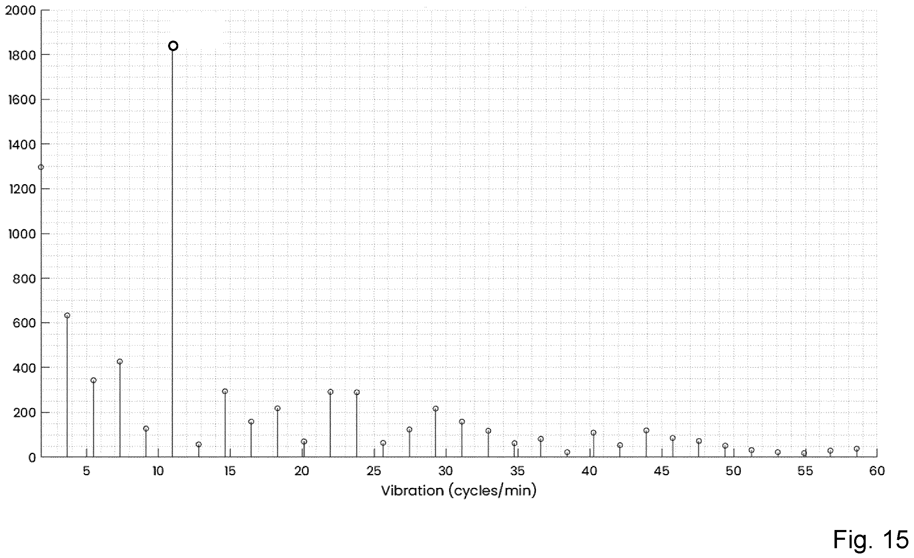

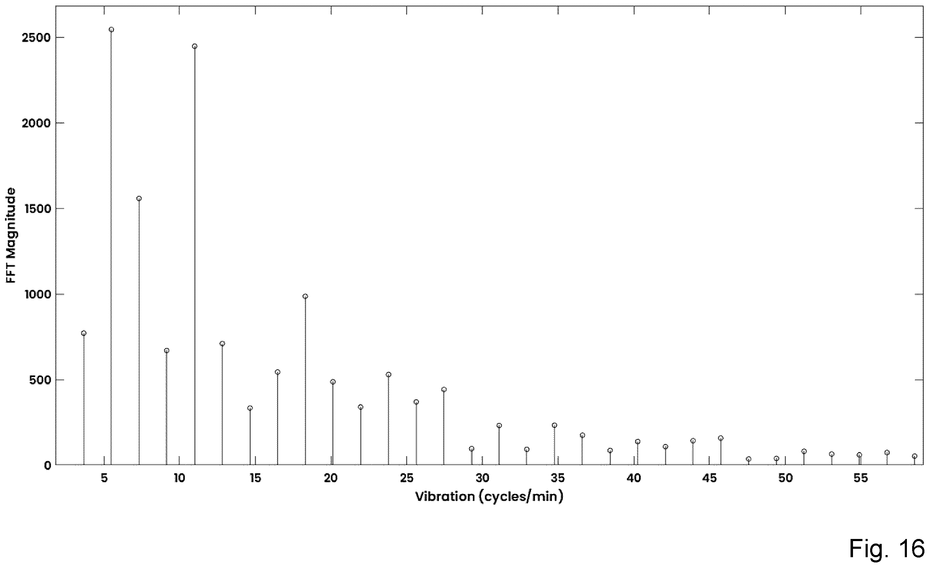

Figure 15, in which a clear peak at around 11 bpm can be seen for the phase stitched signal, while in Figure 16 a corresponding FFT spectrum for the unstitched signal shows no clear peak.

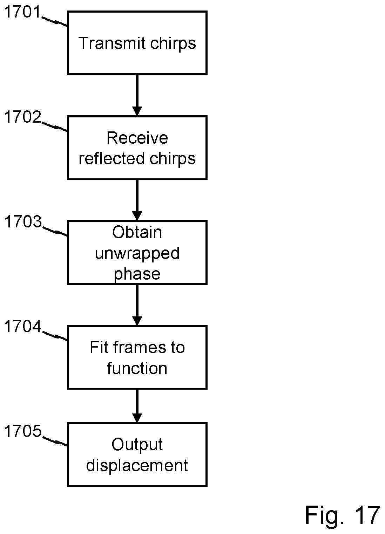

Figure 17 is a flow diagram illustrating a simplified method according to the present disclosure. In a first step 1701 a series of chirp signals are transmitted.

In a second step 1702 a series of reflected chirp signals are received from a target. In a third step, frames of the reflected chirp signals are processed to extract phase information from the transmitted and reflected chirp signals and obtain unwrapped phases from the signals. In a fourth step 1704, the frames are fitted to a function. In a fifth step 1705 a displacement, or change in distance, to a target is determined from the fitted frames. The method in practice operates iteratively in practice, continually transmitting and receiving chirps and processing received frames using a moving window to fit each successive frame to a function that is fit to one or more preceding, i.e. previously received and processed, frames. Each frame is fitted to the function to correct for any phase differences greater than 2π compared to an immediately preceding frame.

From reading the present disclosure, other variations and modifications will be apparent to the skilled person. Such variations and modifications may involve equivalent and other features which are already known in the art of FMCW radar systems, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A computer-implemented method of measuring a change in distance over time using FMCW radar signals, the method comprising:
transmitting (1701) a series of chirp signals;
receiving (1702) a series of reflected chirp signals from a target; and
processing (1703, 1704, 1705) the series of reflected chirp signals to determine a change in distance to the target over time from phase differences between the transmitted and received chirp signals,
wherein phase differences between successive frames (1301, 1302) derived from the received chirp signals are fitted to a function (1303) to correct for any phase differences greater than 2π between the successive frames (1301, 1302).

2. The method of claim 1, wherein the function (1303) is fitted to a first series of phase measurements for a first frame (1301).

3. The method of claim 2, wherein a second series of phase measurements for a second frame (1302) are offset to fit the second series of phase measurements to the function (1303), the offset being optionally an integer multiple of 2π.

4. The method of any preceding claim, wherein the function is a polynomial function, a sinusoidal function or a combination of polynomial and sinusoidal functions.

5. The method of claim 4, wherein the function is a first, second or third order polynomial function.

6. The method of any preceding claim, comprising providing an output signal of displacement to the target over time.

7. The method of claim 6, comprising applying a bandpass filter to the output signal and determining a magnitude and frequency of the output signal within a frequency range defined by the bandpass filter.

8. The method of any preceding claim, wherein each frame comprises two or more chirps and successive frames are separated by an inter-frame interval longer than a pulse repetition interval of the two or more chirps.

9. A method of determining vital signs of a user in a vehicle, the method comprising performing the method according to any preceding claim, wherein the target is the user and the output signal is a heart rate and/or breathing rate of the user.

10. An FMCW radar system (100) comprising:
a transmitter (101) configured to generate and transmit a series of chirp signals (105);
a receiver (102) configured to receive reflected chirp signals (106) from a target (104); and
a signal processor (103) configured to process the series of reflected chirp signals to determine a change in distance to the target (104) over time from phase differences between the transmitted and received chirp signals,
wherein the signal processor (103) is configured to fit phase differences between successive frames containing the received chirp signals to a function to correct for any phase differences greater than 2π between the successive frames.

11. The FMCW radar system (100) of claim 10, wherein the signal processor (103) is configured to fit the function (1303) to a first series of phase measurements for a first frame (1301).

12. The FMCW radar system (100) of claim 11, wherein the signal processor (103) is configured to offset a second series of phase measurements for a second frame (1302) to fit the second series of phase measurements to the function (1303), the offset being optionally an integer multiple of 2π.

13. The FMCW radar system (100) of any one of claims 10 to 12, wherein the function is a polynomial function, a sinusoidal function or a combination of polynomial and sinusoidal functions.

14. The FMCW radar system (100) of any one of claims 10 to 13, wherein the signal processor (103) is configured to provide an output signal of displacement to the target over time.

15. A computer program comprising instructions for causing a signal processor of an FMCW radar system (100) to perform the method according to any one of claims 1 to 9.

## Amended claims

### Amended claims in accordance with Rule 137(2) EPC.

1. A method of measuring a change in distance over time using FMCW radar signals, the method comprising:
transmitting (1701) a series of chirp signals in a plurality of frames;
receiving (1702) a series of reflected chirp signals from a target,
wherein each frame comprises two or more chirps and successive frames are separated by an inter-frame interval longer than a pulse repetition interval of the two or more chirps;
and
processing (1703, 1704, 1705) the series of reflected chirp signals to:
extract phase information from the transmitted and reflected chirp signals; and
fit the frames to a function;
thereby determining a change in distance to the target over time from phase rotation between groups of chirp signals,
wherein a first frame provides a first series of phase measurements, and a second frame provides a second series of phase measurements;
wherein fitting the frames to a function comprises fitting respective phase rotation between phase measurements of successive frames (1301, 1302) to the function (1303) to correct for any phase rotations greater than 2π between the successive frames (1301, 1302); and
wherein the function is a polynomial function, a sinusoidal function or a combination of polynomial and sinusoidal functions.

2. The method of claim 1, wherein the function (1303) is fitted to a first series of phase measurements for a first frame (1301).

3. The method of claim 2, wherein a second series of phase measurements for a second frame (1302) are offset to fit the second series of phase measurements to the function (1303).

4. The method of claim 3, wherein the offset is an integer multiple of 2π.

5. The method of any preceding claim, wherein the function is a first, second or third order polynomial function.

6. The method of any preceding claim, comprising providing an output signal of displacement to the target over time.

7. The method of claim 6, comprising applying a bandpass filterto the output signal and determining a magnitude and frequency of the output signal within a frequency range defined by the bandpass filter.

8. A method of determining vital signs of a user in a vehicle, the method comprising performing the method according to any preceding claim, wherein the target is the user and the output signal is a heart rate and/or breathing rate of the user.

9. An FMCW radar system (100) comprising:
a transmitter (101) configured to generate and transmit a series of chirp signals (105);
a receiver (102) configured to receive reflected chirp signals (106) from a target (104); and
a signal processor (103) configured to process the series of reflected chirp signals according to claim 1.

10. The FMCW radar system (100) of claim 9, wherein the signal processor (103) is configured to fit the function (1303) to a first series of phase measurements for a first frame (1301).

11. The FMCW radar system (100) of claim 10, wherein the signal processor (103) is configured to offset a second series of phase measurements for a second frame (1302) to fit the second series of phase measurements to the function (1303),.

12. The FMCW radar system (100) of any claim 11, wherein the offset is an integer multiple of 2π.

13. The FMCW radar system (100) of any one of claims 9 to 12, wherein the signal processor (103) is configured to provide an output signal of displacement to the target over time.

14. A computer program comprising instructions for causing a signal processor of an FMCW radar system (100) to perform the processing according to any one of claims 1 to 8.
